# DEMANDE DE BREVET EUROPEEN

(11) **EP 2 431 644 A1**
(43) Date de publication de la demande: **21.03.2012**
(21) Numéro de dépôt: 11176303.3
(22) Date de dépôt: 02.08.2011
(51) Int. Cl.: F16L 37/086, F16L 37/096, F16L 37/40

(54) **Raccord de sortie de fluide**

(30) Priorité: 15.09.2010 FR 1057343
(71) Demandeur: Air Liquide Medical Systems, 92160 Antony (FR)
(72) Inventeur: Lopez, Guillaume, 22560 PLEUMEUR BODOU (FR); Collado, Pedro, 77330 OZOIR LA FERRIERE (FR)
(74) Mandataire: De Cuenca, Emmanuel Jaime

(57) **Abrégé**

Raccord de sortie de fluide pour sortie basse pression d'un détendeur d'une bouteille de gaz sous pression, le raccord comprenant un corps (1, 2) définissant un passage de gaz s'étendant selon un axe longitudinal entre une extrémité amont (3) et une extrémité aval (4), un clapet (5) mobile dans le passage entre une position de fermeture du passage et une position d'ouverture du passage, le clapet (5) étant sollicité par un élément (6) de rappel vers sa position de fermeture du passage, une extrémité aval du clapet (5) étant prévue pour être poussée mécaniquement vers sa position d'ouverture par l'extrémité amont d'un embout (7) de soutirage sélectivement connectable dans le raccord, le raccord comprenant au moins un organe (8) de verrouillage sélectif d'un embout (7) connecté dans le raccord, le au moins un organe (8) de verrouillage étant mobile entre une position verrouillée et une position déverrouillée, le raccord comprenant au moins un organe (9) de rappel comprenant une première extrémité fixe bloquée dans ou sur le corps (1, 2) et une seconde extrémité libre en appui contre le au moins un organe (8) de verrouillage, pour solliciter le au moins organe (8) de verrouillage vers sa position verrouillée, caractérisé en ce que la première extrémité du au moins un organe (9) de rappel est située dans un logement (10) du corps (1, 2) et maintenue bloquée dans ce dernier uniquement par butée mécanique formée par ledit corps (1, 2).

## Description

La présente invention concerne un raccord de sortie de fluide.

L'invention concerne notamment un raccord de sortie de fluide, notamment destiné à être monté sur une sortie basse pression d'un détendeur d'une bouteille de gaz sous pression, le raccord comprenant un corps définissant un passage de gaz s'étendant selon un axe longitudinal entre une extrémité amont et une extrémité aval, un clapet mobile dans le passage entre une position de fermeture du passage et une position d'ouverture du passage, le clapet étant sollicité par un élément de rappel vers sa position de fermeture du passage, une extrémité aval du clapet étant prévue pour être poussée mécaniquement vers sa position d'ouverture par l'extrémité amont d'un embout de soutirage sélectivement connectable dans le raccord, le raccord comprenant au moins un organe de verrouillage sélectif d'un embout connecté dans le raccord, le au moins un organe de verrouillage étant mobile entre une position verrouillée et une position déverrouillée, le raccord comprenant au moins un organe de rappel comprenant une première extrémité fixe bloquée dans ou sur le corps et une seconde extrémité libre en appui contre le au moins un organe de verrouillage, pour solliciter le au moins organe de verrouillage vers sa position verrouillée.

.L'invention concerne en particulier un raccord ou une prise de sortie basse pression de type femelle conforme au standard BS 5682.

Ce type de raccord possède un moyen de verrouillage de l'embout de la prise mâle qui vient se connecter dans le raccord.

Ce moyen de verrouillage peut comporter des crochets articulées qui viennent se rabattre dans une gorge périphérique de l'embout de la prise mâle.

Pour que ces crochets puissent se rabattre correctement dans la gorge prévue à cet effet, un système de ressort est prévu. Celui-ci comprend généralement des plaques métalliques fixées au corps du raccord par des vis. Ces plaques sont flexibles et contraintes en flexion de façon à appuyer sur les crochets vers la position de verrouillage.

Cette structure est globalement satisfaisante, cependant, elle nécessite des durées de montage et de démontage relativement longs. De plus, l'encombrement de l'ensemble est relativement important

Un but de la présente invention est de pallier tout ou partie des inconvénients de l'art antérieur relevés ci-dessus.

A cette fin, le raccord selon l'invention, par ailleurs conforme à la définition générique qu'en donne le préambule ci-dessus, est essentiellement caractérisé en ce que la première extrémité du au moins un organe de rappel est située dans un logement du corps et maintenue bloquée dans ce dernier uniquement par butée mécanique formée par ledit corps.

Le raccord selon l'invention peut ainsi être constitué d'un nombre de pièces réduit par rapport à l'art antérieur.

De plus, les temps de montage et de démontage du raccord sont ainsi réduits.

Par ailleurs, des modes de réalisation de l'invention peuvent comporter l'une ou plusieurs des caractéristiques suivantes :
- la première extrémité du au moins un organe de rappel comprend une portion filaire, ladite portion filaire étant logée dans une gorge annulaire du corps formant au moins une partie du logement,
- le corps est formé de deux pièces assemblées de façon sélectivement détachable, le logement étant formé dans une première des deux pièces, en position assemblée avec la première pièce la seconde pièce forme une butée de fermeture du logement pour maintenir la première extrémité du au moins un organe de rappel dans le logement,
- le corps comprend au moins une découpe longitudinale abritant la seconde extrémité du au moins un organe de rappel et permettant un débattement de ladite seconde extrémité,
- le au moins un organe de rappel comprend un ressort filaire,
- le au moins organe de verrouillage comprend un crochet mobile en rotation autour d'un axe parallèle à l'axe du passage pour coopérer sélectivement avec une gorge circonférentielle formée sur la surface extérieure d'un embout,
- le raccord comprend deux organes de verrouillage,
- le raccord comporte deux organes de rappel sollicitant respectivement les deux organes de verrouillage,
- les deux organes de rappel sont identiques et disposés de façon symétrique autour de l'axe du passage,
- le raccord comporte un unique organe de rappel sollicitant simultanément les deux organes de verrouillage,
- le au moins un organe de rappel est constitué d'un ressort filaire comprenant au moins une portion courbe formant la première l'extrémité logée dans un logement du corps et une portion repliée en forme de patte par rapport à la portion courbe, ladite portion repliée formant la seconde extrémité en appui sur un organe de verrouillage,
- le corps du raccord comporte un joint par exemple plat formant un siège d'étanchéité avec le clapet mobile lorsque ce dernier est en position de fermeture,
- le joint d'étanchéité assure l'étanchéité avec un embout de soutirage connecté dans le raccord,
- le raccord comprend au moins une bague montée mobile relativement au corps et comprenant au moins une butée de déverrouillage pour déplacer sélectivement le au moins organe de verrouillage vers sa position déverrouillée selon la position de la bague par rapport au corps,
- le deux pièces formant le corps sont tubulaires et assemblées par vissage étanche,
- la bague est montée mobile en rotation sur le corps autour d'un axe de rotation parallèle à l'axe du passage.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue en coupe, schématique et partielle, illustrant un exemple de réalisation d'un raccord selon l'invention, dans une configuration non connectée à une prise mâle,
- les figures 2 et 3 représentent le raccord de la figure 1 dans des configurations successives d'introduction d'une prise mâle dans le raccord,
- la figure 4 représente le raccord de la figure 1 dans la configuration raccordée à une prise mâle,
- la figure 5 représente une vue en perspective, schématique et partielle illustrant un détail d'une partie du corps du raccord de la figure 1,
- la figure 6 représente une vue en perspective, schématique et partielle illustrant un détail du corps du raccord de la figure 1,
- la figure 7 représente une vue en perspective d'un détail du raccord de la figure 1 illustrant l'organe de rappel du raccord des figures 1 à 5,
- la figure 8 représente une vue en perspective, schématique et partielle, illustrant le raccord de la figure 1 en configuration partiellement démontée.

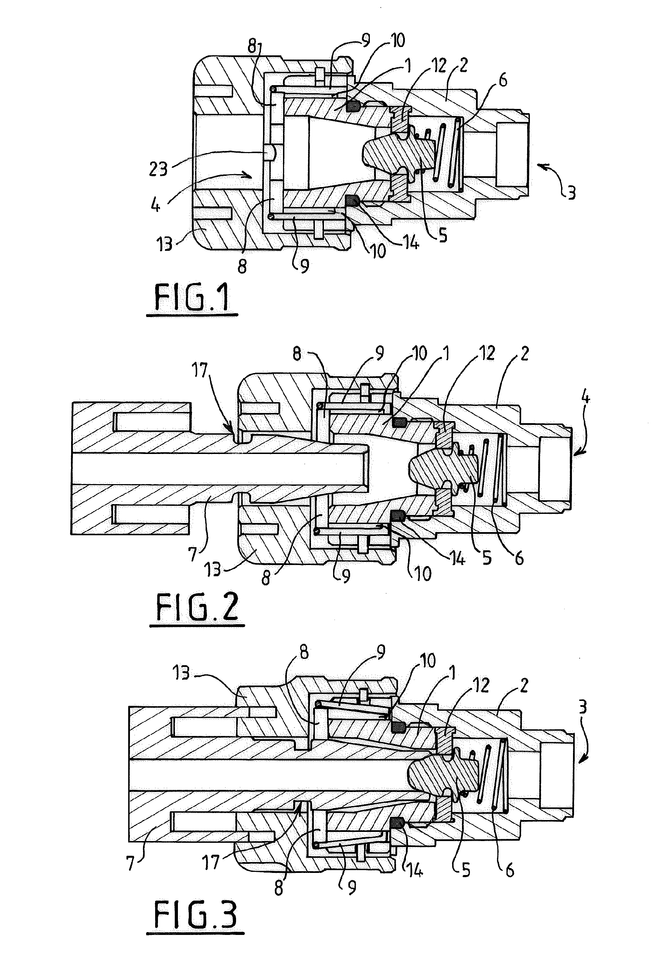

Le raccord (ou prise de sortie) de fluide représenté à la figure 1 comprend un corps 1, 2 définissant un passage de gaz s'étendant selon un axe longitudinal entre une extrémité amont 3 et une extrémité aval 4.

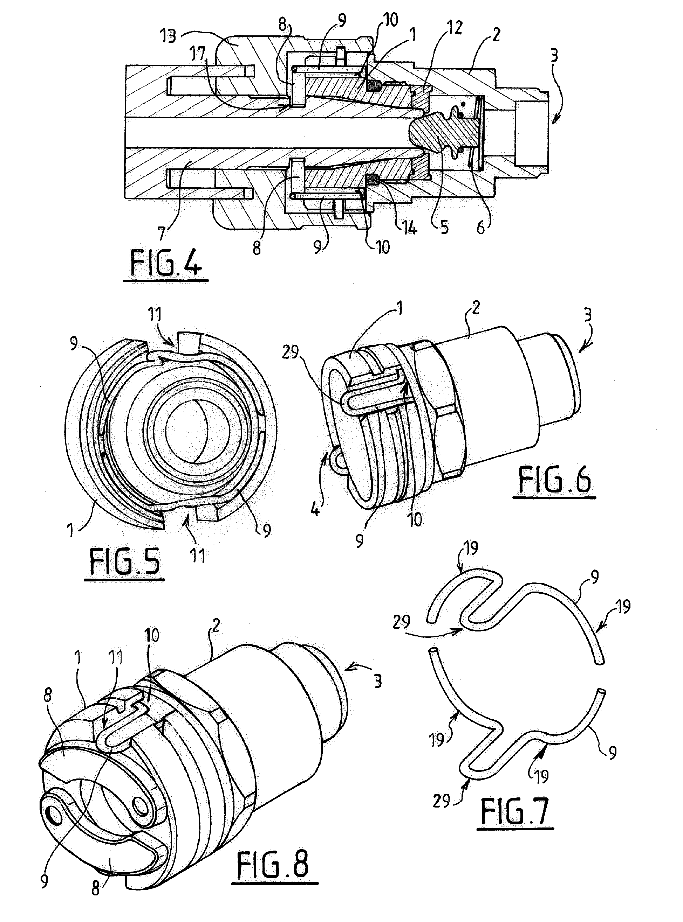

Comme représenté (cf. également les figures 4, 5 et 7), le corps peut être formé de deux pièces 1, 2 tubulaires assemblées de façon sélectivement détachable, par exemple par vissage d'une pièce 1 dans l'autre 2. L'étanchéité des deux pièces 1, 2 est assurée par exemple par un joint 14 torique interposé entre les deux pièces 1, 2.

Un joint 12 par exemple plat est également interposé entre les deux pièces 1, 2 du corps pour former un siège pour un clapet interne 5 mobile en translation. Le clapet 5 est contraint en direction de l'amont vers le siège 12 via un ressort 6, par exemple un ressort de compression.

L'extrémité aval de la première pièce du corps 1, 2 comprend deux crochets 8 de verrouillage (cf. figure 7). Les deux crochets 8 sont destinés à venir se loger sélectivement dans une gorge 17 circonférentielle formée sur la surface extérieure d'un embout 7 connecté dans le raccord pour bloquer l'embout 7 dans le raccord (cf. figure 4).

Les deux crochets 8 sont par exemple mobiles en rotation autour d'axes respectifs parallèles à l'axe longitudinal du passage. Les crochets 8 sont sollicités par défaut vers leur position verrouillée (vers le passage) par un organe 9 de rappel décrit plus en détail ci-après.

Pour déverrouiller les crochets, le raccord comprend une bague 13 montée mobile autour au corps 1, 2. La bague 13 comporte au moins un pion interne formant une butée 23 de déverrouillage pour déplacer sélectivement les crochets vers leur position déverrouillée (c'est-à-dire une position relativement plus écartée du passage interne). Ainsi, selon la position de la bague 13 par rapport au corps 1, 2 (rotation), la ou les butées 23 écartent ou non les crochets 8 par contact mécanique.

L'organe de rappel des crochets 8 comprend deux ressorts 9 ayant chacun une première extrémité fixe bloquée dans le corps 1, 2 et une seconde extrémité libre en appui contre un crochet 8 respectif.

De cette façon, chaque ressort 9 sollicite un crochet 8 de verrouillage vers sa position verrouillée (vers l'intérieur du raccord).

La première extrémité de chaque ressort 9 de rappel est placée dans un logement 10 du corps et maintenue bloquée dans ce dernier uniquement par butée mécanique formée par ledit corps 1, 2.

Plus précisément, et comme représenté à la figure 7, chacun des deux ressorts 9 peut comprendre un ressort filaire comprenant deux portions courbes 19 formant la première l'extrémité logée dans un logement 10 du corps 1, 2 et une portion 29 repliée en forme de patte perpendiculairement à la portion courbe 29, ladite portion 29 repliée formant la seconde extrémité en appui sur un organe 8 de verrouillage.

La première extrémité de chaque ressort 9 (portions courbées en arc de cercle) est logée dans une gorge annulaire du corps 1, 2 formant au moins une partie du logement 10 (cf. figure 5). En position assemblée avec la première pièce 1, la seconde pièce 2 forme une butée de fermeture du logement 10 en forme de gorge, pour maintenir la première extrémité des ressorts 9 de rappel dans la gorge (cf. figure 6).

Comme représenté, (cf. notamment les figures 4 et 5), la première pièce 1 du corps peut comporter également une découpe 11 longitudinale pour chaque ressort 9, pour abriter respectivement la seconde extrémité 29 des deux ressorts 9 et permettre un débattement de ladite seconde extrémité 29 transversalement à l'axe longitudinal.

Les fils déformés formant les ressorts 9 sont facilement logés et maintenus dans le corps 1, 2 tout en garantissant un effort de rappel sur les crochets 8. Cette structure est moins volumineuse et utilise moins de pièces que les solutions selon l'art antérieur. Les temps de montage/démontage du raccord sont également réduits par rapport aux solutions connues.

Bien entendu, l'invention n'est pas limitée à l'exemple de réalisation particulier décrit ci-dessus. Ainsi, par exemple, la forme et le nombre des ressorts 9 de rappel peuvent être différents. En particulier, les deux ressorts 9 filaires peuvent être remplacés par un unique ressort assurant simultanément le rappel des deux crochets 8. Par exemple, deux extrémités adjacentes appartenant respectivement aux deux ressorts 9 de la figure 6 peuvent être solidaires. D'autres formes de ressorts 9 peuvent être envisagées pour assurer la même fonction.

L'invention concerne également une bouteille de gaz sous pression ou tout autre source de gaz munie d'un tel raccord.

## Revendications

1. Raccord de sortie de fluide, notamment destiné à être monté sur une sortie basse pression d'un détendeur d'une bouteille de gaz sous pression, le raccord comprenant un corps (1, 2) définissant un passage de gaz s'étendant selon un axe longitudinal entre une extrémité amont (3) et une extrémité aval (4), un clapet (5) mobile dans le passage entre une position de fermeture du passage et une position d'ouverture du passage, le clapet (5) étant sollicité par un élément (6) de rappel vers sa position de fermeture du passage, une extrémité aval du clapet (5) étant prévue pour être poussée mécaniquement vers sa position d'ouverture par l'extrémité amont d'un embout (7) de soutirage sélectivement connectable dans le raccord, le raccord comprenant au moins un organe (8) de verrouillage sélectif d'un embout (7) connecté dans le raccord, le au moins un organe (8) de verrouillage étant mobile entre une position verrouillée et une position déverrouillée, le raccord comprenant au moins un organe (9) de rappel comprenant une première extrémité fixe bloquée dans ou sur le corps (1, 2) et une seconde extrémité libre en appui contre le au moins un organe (8) de verrouillage, pour solliciter le au moins organe (8) de verrouillage vers sa position verrouillée, **caractérisé en ce que** la première extrémité du au moins un organe (9) de rappel est située dans un logement (10) du corps (1, 2) et maintenue bloquée dans ce dernier uniquement par butée mécanique formée par ledit corps (1, 2) et **en ce que** la première extrémité du au moins un organe (9) de rappel comprend une portion (19) filaire, ladite portion (19) filaire étant logée dans une gorge annulaire du corps (1, 2) formant au moins une partie du logement (10).

2. Raccord selon la revendication 1, **caractérisé en ce que** le corps (1, 2) est formé de deux pièces assemblées de façon sélectivement détachable et **en ce que** le logement (10) est formé dans une première (1) des deux pièces et **en ce que**, en position assemblée avec la première pièce (1), la seconde pièce (2) forme une butée de fermeture du logement (10) pour maintenir la première extrémité du au moins un organe (9) de rappel dans le logement (10).

3. Raccord selon l'une quelconque des revendications 1 ou 2, **caractérisé en ce que** le corps (1) comprend au moins une découpe (11) longitudinale abritant la seconde extrémité du au moins un organe (9) de rappel et permettant un débattement de ladite seconde extrémité.

4. Raccord selon l'une quelconque des revendications 1 à 3, **caractérisé en ce que** le au moins un organe (9) de rappel comprend un ressort filaire.

5. Raccord selon l'une quelconque des revendications 1 à 4, **caractérisé en ce que** le au moins organe (8) de verrouillage comprend un crochet mobile en rotation autour d'un axe parallèle à l'axe du passage pour coopérer sélectivement avec une gorge (17) circonférentielle formée sur la surface extérieure d'un embout (7).

6. Raccord selon l'une quelconque des revendications 1 à 5, **caractérisé en ce qu'**il comprend deux organes (8) de verrouillage.

7. Raccord selon la revendication 6, **caractérisé en ce qu'**il comporte deux organes (9) de rappel sollicitant respectivement les deux organes (8) de verrouillage.

8. Raccord selon la revendication 7, **caractérisé en ce que** les deux organes (9) de rappel sont identiques et disposés de façon symétrique autour de l'axe du passage.

9. Raccord selon la revendication 6, **caractérisé en ce qu'**il comporte un unique organe (9) de rappel sollicitant simultanément les deux organes (8) de verrouillage.

10. Raccord selon l'une quelconque des revendications 7 à 9, **caractérisé en ce que** le au moins un organe (9) de rappel est constitué d'un ressort filaire comprenant au moins une portion courbe (19) formant la première l'extrémité logée dans un logement (10) du corps (1, 2) et une portion (29) repliée en forme de patte par rapport à la portion courbe (29), ladite portion (29) repliée formant la seconde extrémité en appui sur un organe (8) de verrouillage.
